(19) Europäisches Patentamt
European Patent Office
Office européen des brevets

(11) **EP 2 941 094 B1**

(12) **EUROPEAN PATENT SPECIFICATION**

(45) Date of publication and mention
of the grant of the patent:
**20.02.2019 Bulletin 2019/08**

(51) Int Cl.:
***H02M 3/156*** *(2006.01)*     ***H05B 33/08*** *(2006.01)*

(21) Application number: **14166656.0**

(22) Date of filing: **30.04.2014**

(54) **An apparatus and method for stabilizing an average current of an LED lamp**

Vorrichtung und Verfahren zur Stabilisierung eines durchschnittlichen Stroms einer LED-Lampe

Appareil et procédé de stabilisation d'un courant moyen d'une lampe à DEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015 Bulletin 2015/45**

(73) Proprietor: **Rohm Co., Ltd.**
**Kyoto-shi, Kyoto 615-8585 (JP)**

(72) Inventors:
• **Lookman, Paulo**
**Kyoto 615-8585 (JP)**
• **Jiang, Zhenhua**
**Kyoto 615-8585 (JP)**
• **de Vries, Fenno**
**Kyoto 615-8585 (JP)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**US-A1- 2009 058 323**     **US-A1- 2013 121 049**

• **SANG HEE KANG ET AL: "Efficiency Optimization in Digitally Controlled Flyback DC DC Converters Over Wide Ranges of Operating Conditions", IEEE TRANSACTIONS ON POWER ELECTRONICS, INSTITUTE OF ELECTRICAL AND ELECTRONICS ENGINEERS, USA, vol. 27, no. 8, 31 August 2012 (2012-08-31), pages 3734-3748, XP011454760, ISSN: 0885-8993, DOI: 10.1109/TPEL.2012.2186590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method and an apparatus for stabilizing an average current of at least one LED lamp within a flyback converter and in particular to a flyback light-emitting diode driver for stabilizing an average current flowing through at least one LED lamp.

US 2009/0058323 A1 discloses a flyback LED drive circuit with constant current regulation. An inductive device is coupled to an input voltage. A power transistor is connected to the inductive device in series to control the inductive device, wherein energy is stored into the inductive device when the power transistor is turned on.

Light-emitting diode (LED) lamps are rapidly replacing conventional incandescent lamps, fluorescent lamps and other types of light sources due to its high efficiency, high reliability, small size and long operation lifetime. The brightness of the LED lamp depends on the average current that flows through the LED lamp. Consequently, there is a need for a method and apparatus for stabilizing an average current flowing through the LED lamp.

To improve the safety of LED lamps, mostly a mains isolated topology is used, where the peak current is controlled by a circuitry with a flyback topology. The flyback topology allows the LED driver to operate at a larger input voltage range which makes it suitable to connect the LED driver directly to a rectified mains input voltage. Providing a Quasi Resonance operation of the flyback LED driver increases the efficiency of the LED driver. Moreover, a flyback light-emitting diode driver has low manufacturing costs due to a relatively simple current detection, a simple mains isolated casing and lower EMI power due to simpler input filters.

However, a problem of a light-emitting diode driver comprising a Q R flyback topology is that its operation frequency can vary abruptly and can create an overshoot in the LED current flowing through the LED lamp of more than 400%.

Accordingly, it is an object of the present invention to provide an apparatus and a method to overcome these drawbacks.

Accordingly, the invention provides according to a first aspect of the present invention a flyback light-emitting diode driver for stabilizing an average current flowing through at least one LED lamp comprising the features of claim 1.

Accordingly, the flyback light-emitting diode driver according to the first aspect of the present invention has the advantage that it does reduce overshoot currents flowing through the LED lamp.

The invention further provides according to a second aspect an LED lamp having the features of claim 12.

In a still further possible embodiment of the flyback LED driver according to the first aspect of the present invention, the operation time period of the flyback LED driver comprises

a first charging time phase during which the coil is charged until the charging/discharging transistor is turned off by the comparator circuit,

a second flyback time phase during which the coil is discharged through the at least one LED lamp with the charging/discharging transistor being turned off, and

a third time phase until the charging/discharging transis-tor is turned on again in response to the second trigger signal generated by the second detection circuit.

In a still further possible embodiment of the flyback LED driver according to the first aspect of the present invention, the operation time period of the flyback LED driver is given by:

$$T = \Delta t_1 + \Delta t_2 + \Delta t_3,$$

wherein $\Delta t_1$ is the first charging time phase,

$\Delta t_2$ is the second flyback time phase, and

$\Delta t_3$ is the third time phase.

In a possible embodiment of the flyback LED driver according to the first aspect of the present invention, the first charging time phase $\Delta t_1$ is given by:

$$\Delta t_1 = I_{peak} \cdot \frac{L1}{V_{HV}},$$

wherein $I_{peak}$ is the peak current flowing through the coil, L1 is the inductivity of the coil,

$V_{HV}$ is the supply voltage applied to the first terminal of the coil.

In a further possible embodiment of the flyback LED driver according to the first aspect of the present invention, the second flyback time phase $\Delta t_2$ is given by

$$\Delta t_2 = I_{peak} \cdot \frac{L1}{V_{LED}},$$

$I_{peak}$ is the peak current flowing through the coil,
L1 is the inductivity of the coil, and
$V_{LED}$ is the forward voltage of the at least one LED lamp.

In a further possible embodiment of the flyback LED driver according to the first aspect of the present invention, the third time phase $\Delta t_3$ is given by:

$$\Delta t_3 = 0.5 \cdot T_{OSC},$$

wherein $T_{OSC}$ is the oscillation time period of the ringing drain voltage at the drain terminal of the charging/discharging transistor.

In a still further possible embodiment of the flyback LED driver according to the first aspect of the present invention, the average current $I_{avg}$ flowing through the at least one LED lamp depends on the peak current of the coil and the second flyback time phase,
wherein the average current $I_{avg}$ is given by:

$$I_{avg} \approx 0.5 \cdot I_{peak} \cdot \frac{\Delta t_2}{T},$$

wherein the peak current correction control circuit is configured to compensate dynamically in real time a variation of the operation time period T by adjusting the peak current $I_{peak}$ of the coil.

In a still further possible embodiment of the flyback LED driver according to the first aspect of the present invention, the peak current control circuit is configured to adjust the peak current by adapting the amplitude of the output set voltage $V_{set}$ depending on a ratio between the second flyback $\Delta t_2$ time phase and the operation time period T.

In a still further possible embodiment of the flyback LED driver according to the first aspect of the present invention, the peak current control circuit is configured to increase the set voltage $V_{set}$ when the ratio between the second flyback time phase $\Delta t_2$ and the operation time period T decreases.

In a still further possible embodiment of the flyback LED driver according to the first aspect of the present invention, the gate terminal of the charging/discharging NMOS transistor is connected to an output of a control flip-flop set in response to a set control signal and reset in response to the reset control signal generated by the comparator circuit.

In a still further possible embodiment of the flyback LED driver according to the first aspect of the present invention, the set control signal is generated by a logic circuit during an operation time window between a predetermined minimum time period $T_{min}$ and a predetermined maximum time period $T_{max}$ in response to the second trigger signal generated by the second detection circuit.

In a still further possible embodiment of the flyback LED driver according to the first aspect of the present invention, the peak current correction control circuit is configured to perform a linear slope compensation, wherein the set voltage $V_{set}$ is increased linear over time.

In a still further possible embodiment of the flyback LED driver according to the first aspect of the present invention, the peak current correction control circuit is configured to adjust the set voltage $V_{set}$ in a linear slope over time in response to the first trigger signal generated by the first detection circuit.

The invention further provides according to a second aspect a method for stabilizing an average current of at least one LED lamp within a flyback converter comprising the features of claim 13.

According to a possible embodiment of the method according to the second aspect of the present invention, an electrical current flowing through the coil is measured and the compensation is started when the electrical current of the coil discharged through the LED lamp becomes zero.

In the following, possible embodiments of different aspects of the present invention are described in more detail with reference to the enclosed figures.

Fig. 1    shows a circuit diagram of an exemplary embodiment of a flyback light-emitting diode driver according to the first aspect of the present invention;

Fig. 2    shows signal diagrams for illustrating the operation of a flyback light-emitting diode driver;

Fig. 3    shows the dependency of an average current flowing through an LED lamp on a period time variation to illustrate the operation of the apparatus and method according to the present invention;

Fig. 4    illustrates an approximation of a peak current with a linear slope depending on the period time as employed in a possible embodiment of the flyback light-emitting diode driver according to the present invention;

Fig. 5    shows a diagram for illustrating a dependency of an adjustable set voltage to the period time to illustrate the operation of the method and apparatus according to the present invention;

Fig. 6    shows signal diagrams illustrating the operation of a possible embodiment of an apparatus and method according to the present invention;

Fig. 7    shows further signal diagrams for illustrating the operation of a method and apparatus according to the present invention;

Fig. 8    shows a diagram illustrating the ratio between the average current and the peak current depending on a ratio between a period time and a maximum period time for different scenarios for illustrating the operation of a method and apparatus according to the present invention;

Fig. 9    shows a diagram illustrating the ratio between a set current and a peak current depending on a ratio between a period time and a maximum period time for different scenarios for illustrating the operation of an apparatus and method according to the present invention.

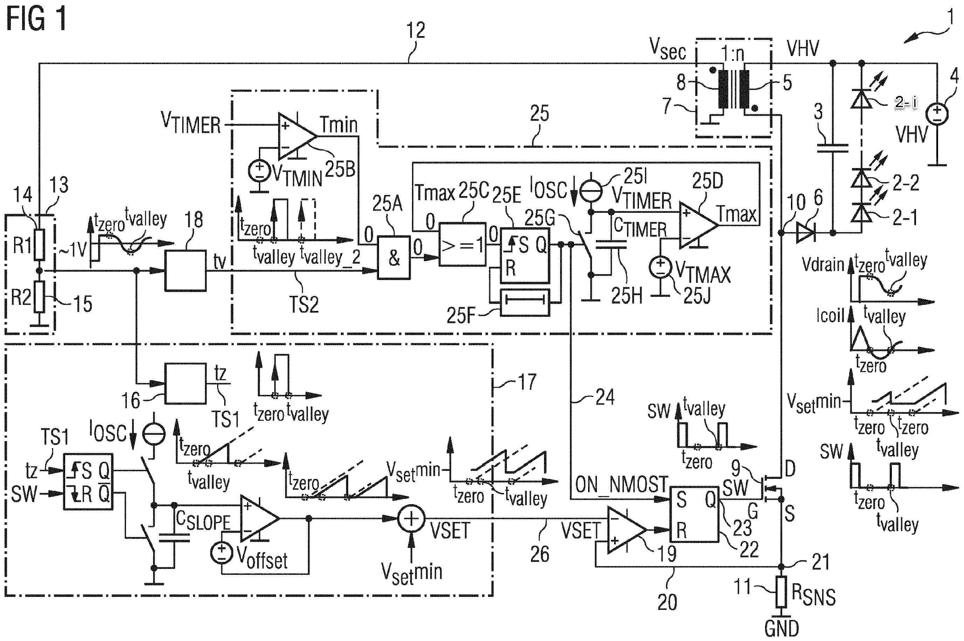

Fig. 1 shows a specific exemplary embodiment of a flyback light-emitting diode (LED) driver 1 for stabilizing an average current $I_{avg}$ flowing through at least one LED lamp. The flyback light-emitting diode driver circuit 1, as illustrated in Fig. 1 is connected to one or more LED lamps 2-1, 2-2, ... 2-n, as shown in Fig. 1. The numbers of LED lamps 2-i connected in series can vary. As can be seen in Fig. 1, a capacitor 3 is connected in parallel to the LED lamps 2-i. The driver is supplied with a supply voltage $V_{HV}$ provided by a supply voltage source 4. The flyback light-emitting diode driver 1 as shown in Fig. 1 is adapted to stabilize an average current $I_{avg}$ flowing through the at least one LED lamp 2-i. The flyback LED driver 1 comprises a coil 5 which is connected in parallel with the at least one LED lamp 2-i, as illustrated in Fig. 1. The coil 5 comprises a first terminal to which the supply voltage $V_{HV}$ is applied. The coil 5 further comprises a second terminal which is connected via a flyback diode 6 to the LED lamps 2-i. In the shown embodiment of Fig. 1, the coil 5 forms a primary coil of a transformer 7 comprising the primary coil 5 and a secondary coil 8.

In the flyback LED driver circuit 1 as illustrated in Fig. 1, a charging/discharging transistor 9 is provided. In the exemplary embodiment shown in Fig. 1, the charging/discharging transistor 9 is a NMOS transistor comprising a gate terminal G, a drain terminal D and a source terminal S. As can be seen in Fig. 1, the drain terminal D of the charging/discharging transistor 9 is connected to the second terminal of the primary coil 5 and the flyback diode 6 at a circuit node 10. The charging/discharging transistor 9 being connected to the coil 5 is adapted to charge the coil 5 when the charging/discharging transistor 9 is turned on and to discharge the coil 5 to the at least one LED lamp 2-i when the charging/discharging transistor 9 is turned off. As can be seen in Fig. 1, the source terminal S of the charging/discharging transistor 9 is connected via a sense resistor 11 to ground GND. The flyback light-emitting diode driver 1 comprises a peak current correction control circuit which is adapted to compensate dynamically a variation of an operation time period T of the flyback LED driver 1 by adjusting a peak current $I_{peak}$ of the coil 5 connected in parallel with the at least one LED lamp 2-i to response to the changing operation time period T.

The secondary coil 8 of the transformer 7 is connected via a signal line 12 to a voltage dividing circuit 13 comprising a first resistor 14 and a second resistor 15 to a first detection circuit 16. The first detection circuit 16 is adapted to detect a time $t_z$ when the primary coil 5 of the transformer 7 is discharged and generates a corresponding first trigger signal TS1 applied to the peak current correction control circuit 17 to start a compensation of a variation of the operation time period T. The secondary coil 8 of the transformer 7 is further connected via the signal line 12 and the voltage dividing circuit 13 to a second detection circuit 18 adapted to detect a time $t_v$ when a ringing amplitude of a drain voltage $V_D$ at the drain terminal D and the node 10 reaches a minimum value to generate a corresponding second trigger signal TS2 to turn the NMOS charging/discharging transistor 9 directly or indirectly on such that the primary coil 5 of the transformer 7 is charged.

The peak current correction control circuit 17 receiving the first trigger signal TS1 starts the compensation of the variation of the operation time period T to output an adjustable set voltage $V_{set}$ which is compared by a comparator circuit 19 with a voltage across the sense resistor 11 connected to the source terminal S of the charging/discharging NMOS transistor 9. In the shown exemplary embodiment of Fig. 1, the comparator circuit 19 is formed by an operation amplifier having a non-inverted input connected via a line 20 to a circuit node 21 between the source terminal S of the charging/discharging transistor 9 and the sense resistor 11. The inverting input of the operation amplifier 19 receives the adjustable set voltage $V_{set}$ from the peak current correction control circuit 17. If the comparator circuit 19 detects that the voltage across the sense resistor 11 reaches the set voltage $V_{set}$ output by the peak current correction control circuit 17, the comparator circuit 19 generates a reset control signal R applied to an RS flip-flop 22 to turn off the charging/discharging NMOS transistor 9 such that the primary coil 5 of the transformer 7 is discharged through the at least one LED lamp 2-i. The RS flip-flop 22 comprises a data output Q connected via a control signal line 23 to the gate terminal G of the charging/ discharging NMOS transistor 9.

The RS flip-flop 22 comprises a set input S which receives a logical control signal ON_NMOST via signal line 24 to turn the charging/discharging transistor 9 on wherein the control signal is generated directly or indirectly by the second trigger signal TS2 output by the second detection circuit 18.

The operation time period T of the flyback LED driver 1 does comprise different phases. The operation time period T comprises a first charging time period $\Delta t_1$ during which the coil 5 is charged until the charging/discharging transistor 9 is turned off by the comparator circuit 19. The operation time period T further comprises a second flyback time phase $\Delta t_2$ during which the coil 5 is discharged through the at least one LED lamp 2-i with the charging/discharging transistor 9 being turned off. The operation time period T further comprises a third time phase $\Delta t_3$ until the charging/discharging transistor 9 is turned on again in response to the second trigger signal TS2 generated by the second detection circuit 18.

Accordingly, the operation time period T of the flyback LED driver is given by:

$$T = \Delta t_1 + \Delta t_2 + \Delta t_3 ,$$

wherein $\Delta t_1$ is the first charging time phase,
$\Delta t_2$ is the second flyback time phase, and
$\Delta t_3$ is the third time phase.

In a possible embodiment, the first charging time phase $\Delta t_1$ is given by:

$$\Delta t_1 = I_{peak} \cdot \frac{L1}{V_{HV}} ,$$

wherein $I_{peak}$ is the peak current flowing through the coil 5, and L1 is the inductivity of the coil 5 and $V_{HV}$ is the supply voltage generated by the supply voltage source 4 and applied to the first terminal of the coil 5.

The second flyback time phase $\Delta t_2$ of the operation time period T is given in a possible embodiment by:

$$\Delta t_2 = I_{peak} \cdot \frac{L1}{V_{LED}} ,$$

wherein $I_{peak}$ is the peak electrical current flowing through the coil 5,
L1 is the inductivity of the coil 5, and
$V_{LED}$ is the forward voltage of the at least one LED lamp 2-i.

Further, the third time phase $\Delta t_3$ of the operation time period T is given by:

$$\Delta t_3 = 0.5 \cdot T_{OSC},$$

wherein $T_{OSC}$ is the oscillation time period of a ringing drain voltage $V_D$ at the drain terminal D of the charging/discharging transistor 9.

The average current $I_{avg}$ flowing through the at least one LED lamp depends on the peak current $I_{peak}$ of the coil 5 and the second flyback time phase $\Delta t_2$, wherein the average current $I_{avg}$ is given by:

$$I_{avg} \approx 0.5 \cdot I_{peak} \cdot \frac{\Delta t_2}{T} .$$

The peak current correction control circuit 17 is configured to compensate dynamically in real time a variation of the operation time period (T) by adjusting the peak current $I_{peak}$ of the coil 5. The peak current control circuit 17 is configured in a possible embodiment to adjust the peak current $I_{peak}$ by adapting the amplitude of the output set voltage $V_{set}$ applied to the comparator circuit 19 depending on a ratio between the second flyback time phase $\Delta t_2$ and the operation time period T. The peak current control circuit 17 is configured to increase the set voltage $V_{set}$ when the ratio between the second flyback time phase $\Delta t_2$ and the operation time period T does decrease.

As shown in Fig. 1, the gate terminal G of the charging/discharging NMOS transistor 9 is connected to the output Q of the control flip-flop 22 set in response to a set control signal S and reset in response to the reset control signal R generated by the comparator circuit 19. The set control signal S is generated by a logic circuit 25 during an operation time window between a predetermined minimum time period $T_{min}$ and a predetermined maximum time period $T_{max}$ in response to the second trigger signal TS2 generated by the second detection circuit 18. Fig. 1 shows a specific exemplary embodiment of the logic circuit 25 generating the set control signal S applied via the control line 24 to the set input of the RS flip-flop 22 in response to the second trigger signal TS2 generated by the second detection circuit 18.

The peak current correction control circuit 17 is configured in a possible embodiment to perform a linear slope compensation, wherein the set voltage $V_{set}$ output by the peak current correction control circuit 17 via a signal control line 26 is increased linear over time. The peak current correction control circuit 17 is configured to adjust the set voltage $V_{set}$ in a linear slope over time in response to the first trigger signal TS1 generated by the first detection circuit 16.

The flyback light-emitting diode driver 1 as illustrated in Fig. 1 provides a real time dynamic peak current control to suppress LED current variation created through supply voltage variation and so-called valley hopping. Real time peak current correction provided by the real time correction control circuit 17 is performed through adding a periodic rising slope of the set voltage. The linear implementation of the slope correction curve can reduce the overshoot error of the overshooting LED current from more than 300% back to less than 11%. In a possible embodiment, the flyback light-emitting driver circuit 1 as illustrated in Fig. 1 can be integrated in an LED lamp.

The real time dynamic peak current correction control for the QR flyback LED driver system provides a more stable QR operation and does suppress automatically a LED current variation caused by supply voltage variation and valley hopping. With the real time dynamic peak current correction control it is possible to provide a more accurate LED current dimming. Accordingly, the circuit 1 as illustrated in Fig. 1 provides a real time current correction for the QR flyback peak current system. As a key benefit it does suppress LED current variations due to input voltage variations suppresses LED current variations due to valley hopping in the QR mode and makes it possible to provide a stable LED dimming for a QR flyback peak current system.

In a flyback DC-DC converter system, the coil current, i.e. the current flowing through the coil 5, is charged to a predetermined value i.e. the peak current $I_{peak}$. The charging/discharging transistor 9 is turned on until the voltage across the sense resistor 11 reaches a preset voltage. The voltage across the coil 5 approximates the supply voltage $V_{HV}$. When the predetermined peak current value $I_{peak}$ is reached, the charging/discharging transistor 9 is turned off and the coil 5 is discharged through the LED lamp 2-i. The voltage across the coil 5 is approximately the forward voltage of the LED lamp and the drain voltage $V_D$ is pushed to $V_{HV} + V_{LED}$.

After the coil 5 has been discharged, a damped oscillation voltage at the drain terminal D of the charging/discharging transistor 9 occurs having an initial amplitude of the LED forward voltage $V_{LED}$ and an oscillation frequency f depending mainly on the inductivity L of the coil 5 and the drain source capacitance $C_{DS}$ of the charging/discharging transistor 9. The next cycle is started when the drain voltage $V_D$ reaches the lowest value during the oscillation phase. This does reduce switching losses in the charging/discharging transistor 9 and reduces EMI. The system does operate in a Quasi-Resonance QR mode.

The operation time period T is inversely proportional to the switching frequency f of the QR system and does depend on the charging time of the coil 5, the discharging time of the coil 5 and on the time until the lowest value of the ringing is detected by the second detection circuit 18.

Accordingly, the operation time period T of the flyback LED driver 1 is the sum of the first charging time phase $\Delta t_1$ during which the coil 5 is charged until the charging/discharging transistor 9 is turned off by the comparator circuit 19, a second flyback time phase $\Delta t_2$ during which the coil 5 is discharged through the at least one LED lamp 2-i with the charging/discharging transistor 9 being turned off and a third time phase $\Delta t_3$ until the charging/discharging transistor 9 is turned on again in response to the second trigger signal TS2 generated by the second detection circuit 18. The average current $I_{avg}$ flowing through the LED-lamp 2-i in, the QR resonant flyback DC-DC system depends on the flyback time phase $\Delta t_2$ and the operation time period T:

$$I_{avg} \approx 0.5 \cdot I_{peak} \cdot \frac{\Delta t_2}{T} \approx 0.5 \cdot I_{peak} \cdot \frac{1}{\frac{V_{LED}}{V_{HV}} + 1 + \frac{0.5 \cdot T_{osc}}{I_{peak} \cdot L} \cdot V_{LED}}$$

Accordingly, the average current $I_{avg}$ flowing through the LED lamp depends on the supply voltage $V_{HV}$, the forward voltage $V_{LED}$, the peak current $I_{peak}$, the oscillation time period $T_{osc}$ and the inductivity L of the coil 5.

The forward voltage $V_{LED}$ of the LED lamp 2-i depends on the temperature and on the manufacturing lot of the LED lamp. An error in the inductivity L of the coil 5 depends mainly on the manufacturing lot. The variation of the oscillation time period $T_{osc}$ depends on the inductivity value L and parasitic capacitances of the charging/discharging transistor 9, the printed circuit board PCB and decoupling capacitors. All the parameters are static errors and can be compensated by an adjusting correction mechanism in the controlling device. The high supply voltage $V_{HV}$ applied to the coil 5 can comprise a large variation.

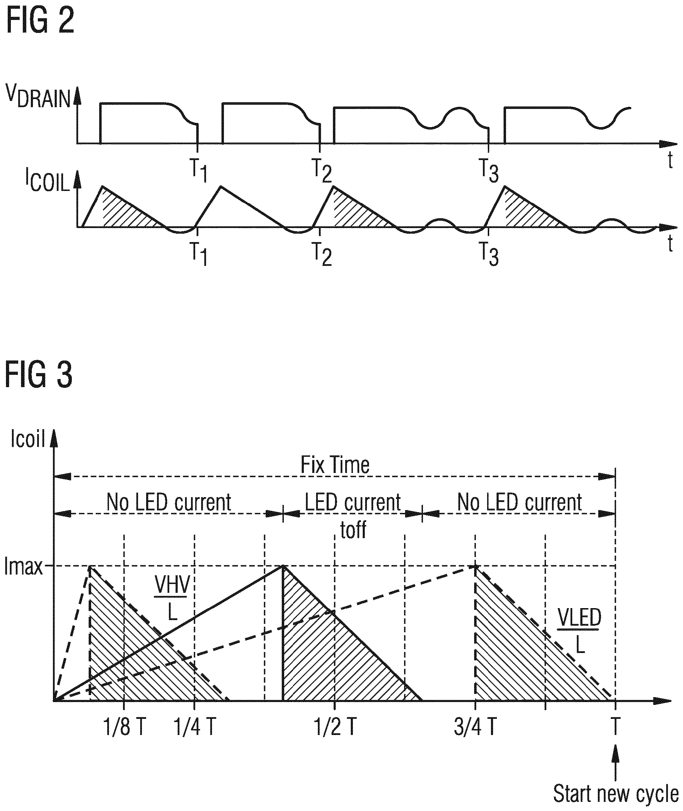

Fig. 2 shows signal diagrams for illustrating the drain voltage $V_{drain}$ at the drain terminal D of the charging/discharging transistor 9 and the corresponding current flowing through the coil 5 over time. As can be seen in Fig. 2, the operation time period T of the flyback LED driver 1 comprises three phases, i.e. a first charging time phase, where the current flowing through the coil 5 increases until it reaches a peak current $I_{peak}$, a second time phase, where the coil 5 is discharged and the current flowing through the coil 5 is going down and a third time phase, where the voltage $V_D$ at the drain terminal D and the current is oscillating with an oscillation frequency $f_{osc}$.

Fast changes can create larger variations on the average LED current $I_{avg}$. The current overshoot of the LED current can lead to a lifetime reduction and even to a destruction of the LED lamp. A change of factor two in the operation period time T does change directly the average current $I_{avg}$ with a factor of two. To compensate the average current $I_{avg}$ for the dynamic change created through valley hopping and jumps of the supply voltage $V_{HV}$, the peak current correction circuit 17 performs a real time compensation or correction.

Fig. 3 illustrates the dependency of the average current $I_{avg}$ from variations of the operation period time T. Fig. 3 shows the current flowing through the coil $I_{coil}$ depending on the operation period time T.

If the flyback converter is set to a predetermined operation frequency $f \left(= \frac{1}{T}\right)$, the average LED current $I_{avg}$ depends on the operation period time T, the flyback time and the forward voltage $V_{LED}$ and the inductivity L of the coil 5:

$$I_{avg} = \frac{1}{2} I_{max} \cdot \frac{t_{off}}{T} = \frac{1}{2} I_{max} \cdot \frac{I_{max} \cdot L}{V_{LED} \cdot T}$$

or

$$I_{max} = \sqrt{\frac{2 \cdot I_{avg} \cdot V_{LED} \cdot T}{L}}$$

When the operation period time T changes, the average current $I_{avg}$ does change as well. To keep the average current $I_{avg}$ constant, the maximum or peak current can also be changed. For instance, for T2 = T/4:

$$\left.\text{Im}ax2\right|_{T2=\frac{T}{4}} = \sqrt{\frac{2 \cdot I_{avg} \cdot V_{LED} \cdot \frac{T}{4}}{L}} = \frac{\text{Im}ax}{2}$$

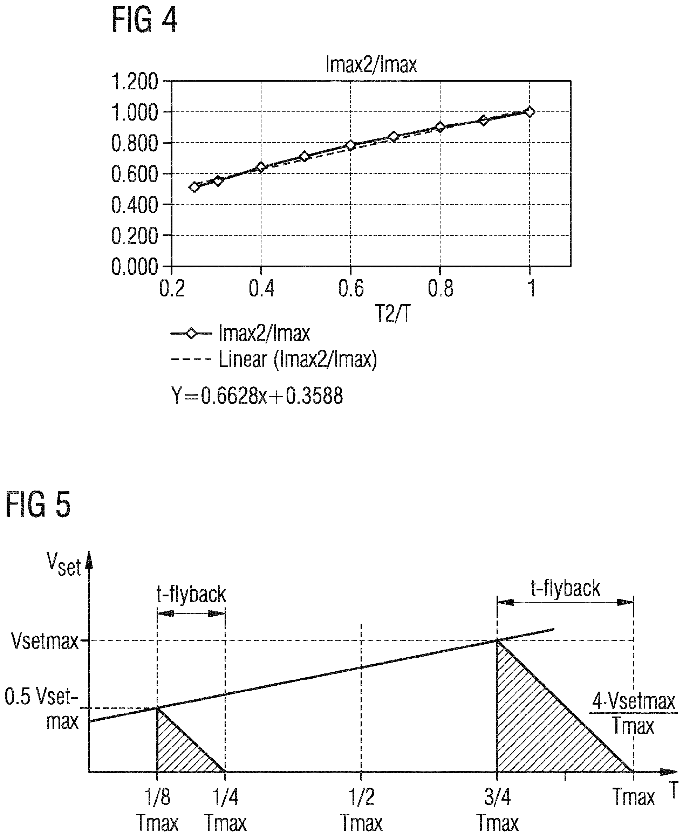

The change of the peak current $I_{peak}$ can be approximated by a linear slope, wherein the linear slope depends on the period time T, as also illustrated in Fig. 4. The flyback time phase depends on the inductivity L of the coil 5 and the forward voltage $V_{LED}$.

When the charging/discharging transistor 9 is turned on, the positive supply voltage $V_{HV}$ is set across the primary coil 5 of the transformer 7 and generates a charge current $\frac{dI_{coil}}{dt} = \frac{V_{HV}}{L1}$, wherein L1 is the inductivity of the primary coil 5. On the secondary side of the transformer 7, a negative voltage is generated depending on a coil ratio n, i.e. the negative voltage generated on the secondary side is $\frac{-V_{HV}}{n}$. The coil 5 is charged to a preset level:

$$I_{peak} = \frac{V_{set}}{R_{sns}},$$

wherein $R_{sns}$ is the resistance of the sense resistor 11.

If the preset peak current value $I_{peak}$ is reached, the charging/discharging transistor 9 is turned off and the coil current $I_{coil}$ flowing through the coil 5 is discharged through the LED lamp 2-i. The discharge current is given by:

$$\frac{dI_{coil}}{dt} = -\frac{(V_{diode} + V_{LED})}{L1}$$

This does create a negative voltage across the primary coil 5 ($V_{diode}+V_{LED}$) and a positive voltage $\frac{(V_{diode}+V_{LED})}{n}$ on the secondary coil 8 of the transformer 7. The drain voltage $V_D$ is pushed to: $V_{HV}+V_{LED}+V_{diode}$.

After the coil 5 has been discharged, a damped oscillation voltage on the drain terminal D of the charging/discharging transistor 9 occurs. The flyback diode 6 stops conducting and the drain voltage $V_D$ does jump from $V_{HV}+V_{LED}+V_{diode}$ to $V_{HV}$. This does induce a ringing with an initial amplitude of $V_{LED}$ and with an oscillation frequency $f_{osc}$ depending mainly on the inductivity L1 of the coil 5 and the drain source capacitance $C_{DS}$ of the charging/discharging transistor 9.

The signal $V_{sec}$ to the secondary side at the secondary coil 8 of the transformer 7 is applied to the second detection circuit 18 adapted to detect the signal valley. The second detection circuit 18 generates a signal pulse, i.e. a trigger signal TS2, when the ringing amplitude reaches its minimum value. This triggers to start the next cycle charging the coil 5 with an increasing current when the drain voltage $V_D$ reaches the lowest value during the oscillation phase. Starting the next cycle of the converter at the lowest drain voltage $V_D$ is also called Quasi Resonance operation mode.

To ensure a correct operation, the next cycle is started after a predefined maximum time $T_{max}$ which defines the lowest switching frequency. To limit the maximal frequency and preventing a false trigger which can be caused by a switching noise, a minimum switching time $T_{min}$ is defined, where the trigger signal TS2 generated by the second detection circuit 18 is ignored. Accordingly, an operation time window is provided between the predetermined minimum time period $T_{min}$ and the predetermined maximum time period $T_{max}$ in response to the second trigger signal TS2 generated by the second detection circuit 18. The used QR flyback in the operation time window can be set for instance between 1/4T and T, creating the condition for the NMOST control signal as follows: $SW_{set} = \{t_{valley}$ AND (T>1/4T)\} OR $T_{max}$.

In the QR flyback system, the average LED current $I_{avg}$ is the average flyback current.

$$I_{avg} = \frac{1}{2} \cdot I_{peak} \cdot \frac{t_{flyback}}{T}$$

In the QR flyback system, the ratio $\dfrac{t_{flyback}}{T}$ depends on the positive supply voltage $V_{HV}$ and the moment of detecting the signal valley by the second detection circuit 18.

To keep the average current $I_{avg}$ constant, the amplitude of the set voltage $V_{set}$ ($I_{peak} \cdot R_{sns}$) value is adapted. The set voltage value $V_{set}$ is increased when the ratio $\dfrac{t_{flyback}}{T}$ decreases. This does provide a constant average flyback current.

The optimum adapted set voltage $V_{set}$ is a square root function. The set voltage $V_{set}$ function can be approximated with a first order function, as also illustrated in Fig. 5.

In a possible embodiment, the maximum value of the set voltage $V_{set}$ can be chosen to be 1.4V. Further, the second correction point can be chosen at $0.5 \cdot V_{setmax}$. This results in a flyback time $t_{flyback}$ of $1/8T_{max}$ and a period time of $1/4T_{max}$.

$$I_{avg2} = \frac{1}{2} \cdot \frac{V_{setmax}}{2 \cdot R_{sns}} \cdot \frac{\frac{1}{8}T_{max}}{T2} \qquad I_{avg1} = \frac{1}{2} \cdot \frac{V_{setmax}}{R_{sns}} \cdot \frac{\frac{1}{4}T_{max}}{T_{max}}$$

If $I_{avg2} = I_{avg1}$, this results in that $T2 = 1/4T_{max}$.

This results in a linear slope approximation:

$$V_{slope(t)} = a \cdot (t) + b, t \text{ starts at } tz \ (t = 0) .$$

$$a = \frac{\Delta(V_{slope(t)})}{\Delta t} = \frac{0.5 \cdot V_{setmax}}{\frac{5}{8}T_{max}} \text{ and } b = 0.4 \cdot V_{setmax}$$

The first detection circuit 16 creates a signal TS1 to indicate the moment in time, where the primary coil 5 is discharged. The first detection circuit 16 is adapted to detect the time $t_z$ when the primary coil 5 of the transformer 7 is discharged and does generate a corresponding first trigger signal TS1 applied to the peak current correction control circuit 17 to start the compensation of the variation of the operation time period T. Accordingly, the compensation of the set voltage $V_{set}$ is triggered by the first detection circuit 16.

The time base for the slope compensation is synchronized at a maximum period of the QR resonance system. Using the same DC reference current for the slope compensation as that of the maximal period timer, the logic circuit 25 does make the slope compensation independently of the frequency setting.

$$T_{\max} = \frac{C_{timer}}{I_{osc}} \cdot V_{T\max} \, , \quad V_{slope}(T_{\max}) = \frac{I_{osc}}{C_{slope}} \cdot T_{\max} = \frac{6}{5} V_{set\max}$$

Result
$$C_{slope} = C_{timer} \frac{V_{T\max}}{Vslope(T_{\max})}$$

Setting $V_{offset} = 0V$, the slope compensation starts directly at time $t_z$. The minimum set voltage $V_{setmin}$ can be $0.4 \cdot V_{setmax}$.

As can be seen in Fig. 1, the logic circuit 25 implements the operation time window between the minimum period time $T_{min}$ and the maximum period time $T_{max}$. As can be seen in Fig. 1, the trigger signal TS2 generated by the second detection circuit 18 is applied to an AND gate 25A being connected also to the output of a comparator 25B implemented as an operation amplifier. The output of the AND gate 25A is applied to an OR gate 25C having a second input connected to another comparator 25D also implemented as an operation amplifier, as illustrated in Fig. 1. The output of the OR gate 25C is connected to a set input of a RS flip-flop 25E having an output Q being connected via the control line 24 to the set input of the RS flip-flop 22 and providing the On_NMOST control signal to turn on the charging/discharging transistor 9. The data output Q of the flip-flop 25E is fed back via a delay circuit 25F to the reset input R of the same flip-flop. The output Q of the flip-flop 25E controls a switch 25G connected to a capacitor 25H having the capacitance $C_{timer}$. The logic circuit 25 further comprises a current source 251 providing a current $I_{osc}$ and a reference voltage source 25J generating a voltage $V_{Tmax}$.

Using a QR time window with a maximum frequency of 1/4T, the beginning part of the slope can be a straight line. This can be achieved by using a offset voltage $V_{offset}$ of $0.5V_{setmax}$ and a minimum set voltage $V_{setmin}$ with $0.5 \cdot V_{setmax}$, as also illustrated in Fig. 5.

| Voffset | VSETmin | VSETmax | Vslope(Tmax) | VT$_{MAX}$ | C$_{slope}$ |
|---------|---------|---------|--------------|------------|-------------|
|  |  |  | $\frac{6}{5} VSET\max$ |  | $C_{TIMER} \cdot \dfrac{V_{TMAX}}{Vslope(T_{MAX})}$ |
| [V] | [V] | [V] | [V] | [V] |  |
| 0 | 0.56 | 1.4 | 1.68 | 1.2 | 0.714·C$_{TIMER}$ |
| 0.14 | 0.7 | 1.4 | 1.68 | 1.2 | 0.714·C$_{TIMER}$ |

Remark: $V_{offset}=0.14V$, slope starts with a straight line at $t_z$.

The value of the slope voltage $V_{slope}$ can be reset after detection of the peak current $I_{peak}$, when the charging/discharging transistor 9 is turned off. The slope has to be ready for the next detection of the time $t_z$ so that the reset time depends on the discharging time of the primary coil 5.

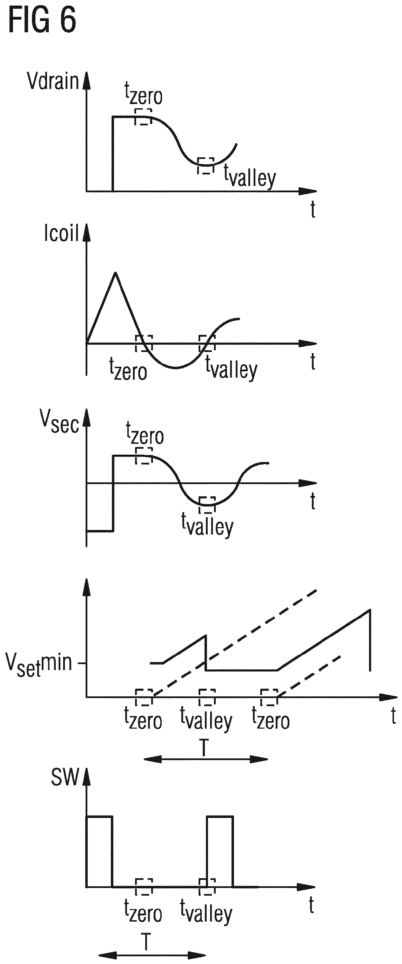

Fig. 6 illustrates the timing of different signals within the driver circuit 1, in particular the drain voltage $V_{drain}$ at the drain terminal of the charging/discharging transistor 9, the coil current $I_{coil}$ flowing through the primary coil 5. The secondary voltage $V_{sec}$ of the secondary coil 8, the set voltage $V_{set}$ output by the peak current correction control circuit 17 and the control signal SW are applied to the gate terminal of the charging/discharging transistor 9.

To compensate the influence of the variable period time T of the average current $I_{avg}$, the maximum reference current is increased depending on the period time T.

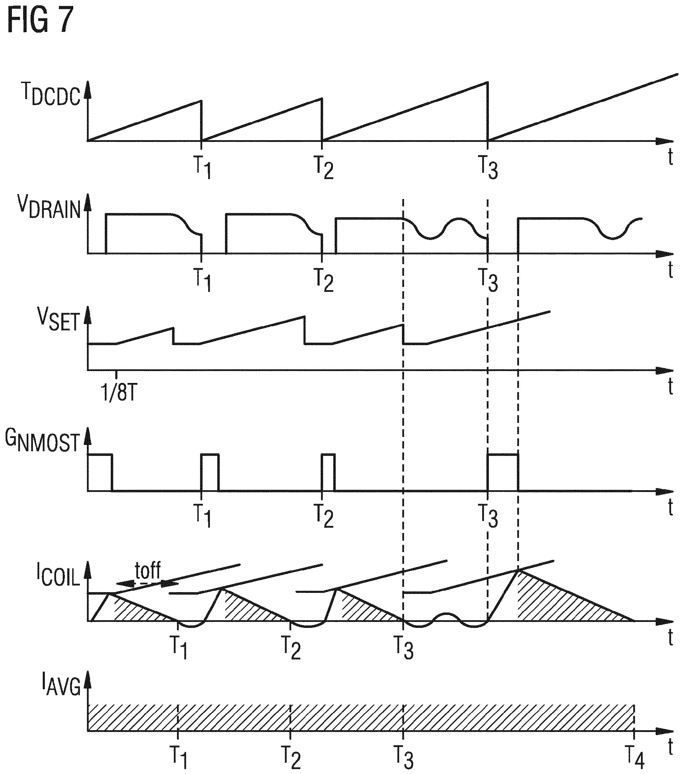

Fig. 7 shows signal diagrams illustrating the operation of the method and apparatus 1 according to the present invention. Fig. 7 shows the operation period time T, the drain voltage $V_{drain}$ at the drain terminal D, the set voltage $V_{set}$ output by the peak current correction control circuit 17, the voltage at the drain gate terminal G of the charging/discharging transistor 9, the current $I_{coil}$ through the primary coil 5 and the resulting average current $I_{avg}$. The set voltage $V_{set}$ is the internal reference voltage which sets the maximal peak current $I_{peak}$. The maximal peak current $I_{peak}$ is $\dfrac{V_{set}}{R_{sns}}$. At the moment when the primary coil 5 is discharged, the compensation feed forward slope is started. In this way, the slope compensation does correct for the time that the new charge cycle is started (valley detection) and for the charging time ($V_{HV}$ variation). This results in an almost constant average current $I_{avg}$, as shown in Fig. 7.

A small error might be created by using a straight line slope compensation instead of a square root compensation. For the chosen slope compensation, the average current $I_{avg}$ can be calculated depending on current period time T. With condition:

$$0.25 \cdot T_{\max} < T < T_{\max} \ , \quad t_{off} = I_{set} \frac{T_{\max}}{4 \cdot I_{max}} \ , \quad t_{off\,\max} = \frac{T_{\max}}{4}$$

and

$$I_{avg} = \frac{1}{2} I_{max} \cdot \frac{t_{off}}{T}$$

For an ideal slope compensation, the electrical currents I are given as follows:

$$I_{set} = I_{\max} \cdot \sqrt{\frac{T}{T_{\max}}}$$

$$I_{avg} = \frac{1}{8} \cdot I_{\max}$$

For a linear slope compensation, the electrical currents I are given by:

$$I_{set} = \frac{1}{3} \cdot I_{\max} \cdot \left(1 + 2 \cdot \frac{T}{T_{\max}}\right)$$

$$I_{avg} = \left[\frac{1}{3} \cdot \left(1 + 2 \cdot \frac{T}{T_{\max}}\right)\right]^2 \cdot \frac{I_{\max}}{8} \cdot \frac{T_{\max}}{T} \qquad (8)$$

The following Table indicates different scenarios, i.e. a first scenario with an ideal slope compensation as defined by the equations, a scenario with a linear compensation as defined by the equations and a scenario with no compensation.

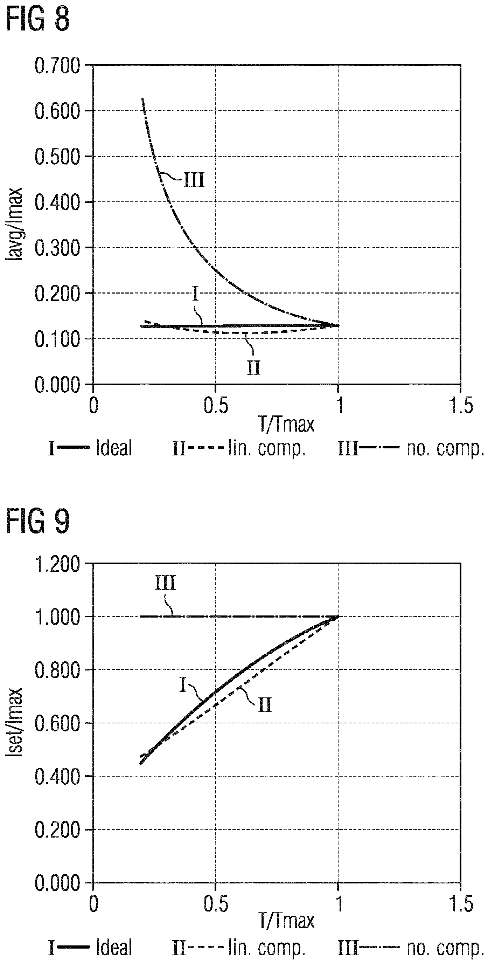

Fig. 8 shows the dependency between a ratio between the average current $I_{avg}$ and the peak current $I_{peak}$ and a ratio between the period time T and the maximum period time $T_{max}$ for the different three scenarios as indicated in the Table, i.e. ideal compensation (I), linear compensation (II) and no compensation (III).

| $\dfrac{T}{T\max}$ | | Ideal | | | linear compensation | | | | | no compensation | | | |
|---|---|---|---|---|---|---|---|---|---|---|---|---|---|
| | | $\dfrac{Iset}{I\max}$ | $\dfrac{IAVG}{I\max}$ | | $\dfrac{Iset}{I\max}$ | $\dfrac{IAVG}{I\max}$ | $\dfrac{IAVGlin.}{IAVGideal}$ | error | | $\dfrac{Iset}{I\max}$ | $\dfrac{IAVG}{I\max}$ | $\dfrac{IAVGno\ comp.}{IAVGideal}$ | error |
| | | | | | | | | | | | | | |
| 0.2 | | 0.447 | 0.125 | | 0.467 | 0.136 | 1.09 | 8.9% | | 1 | 0.625 | 5.00 | 400.0% |
| 0.25 | | 0.500 | 0.125 | | 0.500 | 0.125 | 1.00 | 0.0% | | 1 | 0.500 | 4.00 | 300.0% |
| 0.3 | | 0.548 | 0.125 | | 0.533 | 0.119 | 0.95 | -5.2% | | 1 | 0.417 | 3.33 | 233.3% |
| 0.35 | | 0.592 | 0.125 | | 0.567 | 0.115 | 0.92 | -8.3% | | 1 | 0.357 | 2.86 | 185.7% |
| 0.4 | | 0.632 | 0.125 | | 0.600 | 0.113 | 0.90 | -10.0% | | 1 | 0.313 | 2.50 | 150.0% |
| 0.45 | | 0.671 | 0.125 | | 0.633 | 0.111 | 0.89 | -10.9% | | 1 | 0.278 | 2.22 | 122.2% |
| 0.46 | | 0.678 | 0.125 | | 0.640 | 0.111 | 0.89 | -11.0% | | 1 | 0.272 | 2.17 | 117.4% |
| 0.48 | | 0.693 | 0.125 | | 0.653 | 0.111 | 0.89 | -11.1% | | 1 | 0.260 | 2.08 | 108.3% |
| 0.49 | | 0.700 | 0.125 | | 0.660 | 0.111 | 0.89 | -11.1% | | 1 | 0.255 | 2.04 | 104.1% |
| 0.5 | | 0.707 | 0.125 | | 0.667 | 0.111 | 0.89 | -11.1% | | 1 | 0.250 | 2.00 | 100.0% |
| 0.51 | | 0.714 | 0.125 | | 0.673 | 0.111 | 0.89 | -11.1% | | 1 | 0.245 | 1.96 | 96.1% |
| 0.52 | | 0.721 | 0.125 | | 0.680 | 0.111 | 0.89 | -11.1% | | 1 | 0.240 | 1.92 | 92.3% |
| 0.54 | | 0.735 | 0.125 | | 0.693 | 0.111 | 0.89 | -11.0% | | 1 | 0.231 | 1.85 | 85.2% |
| 0.56 | | 0.748 | 0.125 | | 0.707 | 0.111 | 0.89 | -10.8% | | 1 | 0.223 | 1.79 | 78.6% |
| 0.58 | | 0.762 | 0.125 | | 0.720 | 0.112 | 0.89 | -10.6% | | 1 | 0.216 | 1.72 | 72.4% |
| 0.6 | | 0.775 | 0.125 | | 0.733 | 0.112 | 0.90 | -10.4% | | 1 | 0.208 | 1.67 | 66.7% |
| 0.6 | | 0.775 | 0.125 | | 0.733 | 0.112 | 0.90 | -10.4% | | 1 | 0.208 | 1.67 | 66.7% |
| 0.65 | | 0.806 | 0.125 | | 0.767 | 0.113 | 0.90 | -9.6% | | 1 | 0.192 | 1.54 | 53.8% |
| 0.7 | | 0.837 | 0.125 | | 0.800 | 0.114 | 0.91 | -8.6% | | 1 | 0.179 | 1.43 | 42.9% |
| 0.75 | | 0.866 | 0.125 | | 0.833 | 0.116 | 0.93 | -7.4% | | 1 | 0.167 | 1.33 | 33.3% |
| 0.8 | | 0.894 | 0.125 | | 0.867 | 0.117 | 0.94 | -6.1% | | 1 | 0.156 | 1.25 | 25.0% |
| 0.85 | | 0.922 | 0.125 | | 0.900 | 0.119 | 0.95 | -4.7% | | 1 | 0.147 | 1.18 | 17.6% |
| 0.9 | | 0.949 | 0.125 | | 0.933 | 0.121 | 0.97 | -3.2% | | 1 | 0.139 | 1.11 | 11.1% |

(continued)

| $\dfrac{T}{T\text{max}}$ | Ideal | | linear compensation | | | | no compensation | | | |
|---|---|---|---|---|---|---|---|---|---|---|
| | $\dfrac{I\text{set}}{I\text{max}}$ | $\dfrac{IAVG}{I\text{max}}$ | $\dfrac{I\text{set}}{I\text{max}}$ | $\dfrac{IAVG}{I\text{max}}$ | $\dfrac{IAVGlin.}{IAVGideal}$ | error | $\dfrac{I\text{set}}{I\text{max}}$ | $\dfrac{IAVG}{I\text{max}}$ | $\dfrac{IAVGno\ comp.}{IAVGideal}$ | error |
| 0.95 | 0.975 | 0.125 | 0.967 | 0.123 | 0.98 | -1.6% | 1 | 0.132 | 1.05 | 5.3% |
| 1 | 1.000 | 0.125 | 1.000 | 0.125 | 1.00 | 0.0% | 1 | 0.125 | 1.00 | 0.0% |

Further, Fig. 9 shows the dependency between the ratio between the set current $I_{set}$ and the maximum peak current $I_{peak}$ and the ratio between the period time T and the maximum period time $T_{max}$ for the three scenarios, as given in the above Table, i.e. ideal compensation (I), linear compensation (II) and no compensation (III).

As can be seen, a square root compensation for the maximum peak current $I_{peak}$ can keep the average current $I_{avg}$ flowing through the LED $I_{avg}$ constant for a fast variation of the supply voltage $V_{HV}$ and valley hopping created in the QR mode. Implementing a straight forward linear compensation for the peak current $I_{peak}$, reduces the error in the average LED current $I_{avg}$ for a fast variation of the period time to less than 11.1%, as can also be seen in the above Table. Optimizing the rise time of the slope, the variation of the average current $I_{avg}$ can be reduced to less than 6%.

According to a further aspect of the invention, a correction system is provided for a voltage output QR flyback converter. The correction system does also reduce the dependency of the output voltage (sensitivity) on the input voltage variation of the supply voltage $V_{HV}$.

**Claims**

1. A flyback light-emitting diode (LED) driver (1) for stabilizing an average current ($I_{avg}$) flowing through one LED lamp (2 - i) or a plurality of LED lamps (2 - i) connected in series, said flyback LED driver (1) comprising:

   a transformer (7) comprising a primary coil (5) connected in parallel with the one or more LED lamps (2-i) and a secondary coil (8); a peak current correction control circuit (17) which is adapted to compensate dynamically a variation of an operation time period (T) of said flyback LED driver (1) by adjusting a peak current ($I_{peak}$) of the primary coil (5) in response to the changing operation time period (T);
   a charging/discharging transistor (9) connected to said primary coil (5) and adapted to charge the primary coil (5) when the charging/discharging transistor (9) is turned on and to discharge the primary coil (5) through the one or more LED lamps (2-i) when the charging/discharging transistor (9) is turned off,
   **characterized in that**
   the charging/discharging transistor (9) is a NMOS transistor having a gate terminal (G) controlled by said peak current correction control circuit (17), a drain terminal (D) connected to said primary coil (5), and a source terminal (S) connected via a sense resistor (11) to ground (GND);
   the peak current correction control circuit (17) comprises a first detection circuit (16) connected to the secondary coil (8) and adapted to detect a time ($t_z$) when said primary coil (5) is discharged and to generate a first trigger signal (TS1);
   the flyback LED driver (1) further comprises a second detection circuit (18) adapted to detect a time ($t_v$) when a ringing amplitude of a drain voltage ($V_D$) at a drain terminal (D) of the charging/discharging transistor (9) reaches a minimum value and to generate a second trigger signal (TS2),
   wherein said peak current correction control circuit (17) is adapted to receive the first trigger signal (TS1) and to start a compensation of the variation of an operation time period (T) to output an adjustable set voltage ($V_{set}$), wherein the peak current correction control circuit (17) outputs an adjustable set voltage ($V_{set}$) which is compared by a comparator circuit (19) with a voltage across the sense resistor (11) connected to the source terminal (S) of said charging/discharging NMOS transistor (9), and wherein if the comparator circuit (19) detects that the voltage across the sense resistor (11) reaches the set voltage ($V_{set}$), output by said peak current correction control circuit (17), it generates a reset control signal (R) to turn off the charging/discharging NMOS transistor (9) such that the primary coil (5) is discharged through the one or more LED lamps (2-i), and
   wherein said flyback LED driver (1) is further adapted to turn on the charging/discharging transistor (9) to charge the primary coil (5) in a first phase,
   turn off the charging/discharging transistor (9) to discharge the primary coil (5) in a second phase succeeding the first phase upon detecting that the voltage across the sense resistor (11) reaches the adjustable set voltage (Vset), and turn on the charging/discharging transistor (9) to charge the primary coil (5) again in a third phase succeeding the second phase in response to the second trigger signal (TS2) generated by the second detection circuit.

2. The flyback LED driver according to claim 1, wherein a supply voltage ($V_{HV}$) is applied to a first terminal of said coil (5) and a second terminal of said coil (5) is connected via a flyback diode (6) to said one or more LED lamps (2-i) and is connected to the drain terminal (D) of said charging/discharging NMOS transistor (9).

3. The flyback LED driver according to claim 1 or 2, wherein:

   - the first phase is a first charging time phase ($\Delta t_1$) during which the primary coil (5) is charged until the charging/discharging transistor (9) is turned off by said comparator circuit (19),
- the second phase is a second flyback time phase ($\Delta t_2$) during which the coil (L1) is discharged through the one or more LED lamps (2-i) with the charging/discharging transistor (9) being turned off, and
- the third phase is a third time phase ($\Delta t_3$) until the charging/discharging transistor (9) is turned on again in response to the second trigger signal (TS2) generated by the second detection circuit (18).

4. The flyback LED driver according to claim 3,
wherein the operation time period (T) of said flyback LED driver (1) is given by:

$$T = \Delta t_1 + \Delta t_2 + \Delta t_3,$$

wherein

$\Delta t_1$ is the first charging time phase given by:

$$\Delta t_1 = I_{peak} \cdot \frac{L1}{V_{HV}},$$

$I_{peak}$ being the peak current flowing through the coil (5),
L1 being the inductivity of the coil (5),
$V_{HV}$ being the supply voltage applied to the first terminal of the coil (5),

wherein $\Delta t_2$ is the second flyback time phase given by:

$$\Delta t_2 = I_{peak} \cdot \frac{L1}{V_{LED}},$$

$I_{peak}$ being the peak current flowing through the coil (5),
L1 being the inductivity of the coil (5), and
$V_{LED}$ being the forward voltage of the one or more LED lamps (2-i), and

wherein $\Delta t_3$ is the third time phase given by:

$$\Delta t_3 = 0.5 \cdot T_{OSC},$$

$T_{OSC}$ being the oscillation time period of the ringing drain voltage ($V_D$) at the drain terminal (D) of the charging/discharging transistor (9).

5. The flyback LED driver according to claim 4,
wherein the average current ($I_{avg}$) flowing through the one or more LED lamps (2-i) depends on the peak current ($I_{peak}$) of the coil (5) and the second flyback time phase ($\Delta t_2$), wherein the average current ($I_{avg}$) is given by:

$$I_{avg} \approx 0.5 \cdot I_{peak} \cdot \frac{\Delta t_2}{T},$$

wherein the peak current correction control circuit (17) is configured to compensate dynamically in real time a variation of the operation time period (T) by adjusting the peak current ($I_{peak}$) of the coil (5).

**6.** The flyback LED driver according to claim 5,
wherein the peak current control circuit (17) is configured to adjust the peak current ($I_{peak}$) by adapting the amplitude of the output set voltage ($V_{set}$) depending on a ratio between the second flyback time phase ($\Delta t_2$) and the operation time period (T).

**7.** The flyback LED driver according to claim 6,
wherein the peak current control circuit (17) is configured to increase the set voltage ($V_{set}$) when the ratio between the second flyback time phase ($\Delta t_2$) and the operation time period (T) decreases.

**8.** The flyback LED driver according to one of the preceding claims 1 to 7,
wherein the gate terminal (G) of the charging/discharging NMOS transistor (9) is connected to an output (Q) of a control flip-flop (22) set in response to a set control signal (S) and reset in response to the reset control signal (R) generated by said comparator circuit (19).

**9.** The flyback LED driver according to claim 8,
wherein the set control signal (S) is generated by a logic circuit (25) during an operation time window between a predetermined minimum time period ($T_{min}$) and a predetermined maximum time period ($T_{max}$) in response to the second trigger signal (TS2) generated by the second detection circuit (18).

**10.** The flyback LED driver according to claims 6 or 7, wherein the peak current correction control circuit (17) is configured to perform a linear slope compensation, wherein the set voltage ($V_{set}$) is increased linear over time.

**11.** The flyback LED driver according to claim 10,
wherein the peak current correction control circuit (17) is configured to adjust the set voltage ($V_{set}$) in a linear slope over time in response to the first trigger signal (TS1) generated by the first detection circuit (16).

**12.** An LED lamp (2) comprising a flyback LED driver (1) according any of claims 1 to 11.

**13.** A method for stabilizing an average current ($I_{avg}$) of one LED lamp (2-i) or a plurality of LED lamps (2 - i) connected in series within a flyback converter (1)
wherein a variation of an operation time period (T) of said flyback converter (1) is compensated dynamically in real time by increasing, via a peak current correction control circuit (17), a peak current ($I_{peak}$) of a primary coil (5) of a transformer (7) comprising the primary coil (5) and a secondary coil (8), the primary coil (5) being connected in parallel with the one or more LED lamps (2-i) in response to the changing operation time period (T);
charging the primary coil (5) by a charging/discharging transistor (9) connected to said primary coil (5) when the charging/discharging transistor (9) is turned on and discharging the primary coil (5) through the one or more LED lamps (2-i) when the charging/discharging transistor (9) is turned off,
**characterized in that**
the charging/discharging transistor (9) is a NMOS transistor having a gate terminal (G) controlled by said peak current correction control circuit (17), a drain terminal (D) connected to said primary coil (5), and a source terminal (S) connected via a sense resistor (11) to ground (GND) ;
the method further comprises the steps of:

detecting a time ($t_z$) when said primary coil (5) is discharged and generating a first trigger signal (TS1);
detecting a time ($t_v$) when a ringing amplitude of a drain voltage ($V_D$) at a drain terminal (D) of the charging/discharging transistor (9) reaches a minimum value and to generating a second trigger signal (TS2); and
receiving the first trigger signal (TS1) and starting a compensation of the variation of an operation time period (T) to output an adjustable set voltage ($V_{set}$),
wherein the charging/discharging transistor (9) is turned on to charge the primary coil (5) in a first phase, the charging/discharging transistor (9) is turned off to discharge the coil (5) in a second phase succeeding the first phase upon detecting that the voltage across the sense resistor (11) reaches the adjustable set voltage (Vset),
wherein the adjustable set voltage (Vset) is compared with a voltage across a sense resistor (11) connected to the source terminal (S) of said charging/discharging NMOS transistor (9), and wherein if it is detected that the voltage across the sense resistor (11) reaches the set voltage (Vset), a reset control signal (R) is generated to turn off the charging/discharging NMOS transistor (9) such that the primary coil (5) is discharged through the one or more LED lamps (2-i),and the charging/discharging transistor (9) is turned on to charge the primary coil (5) again in a third phase succeeding the second phase in response to the second trigger signal (TS2) generated by the second detection circuit.

**14.** The method according to claim 13,
wherein an electrical current flowing through said coil primary (5) is measured and the compensation is started when the electrical current of the primary coil (5) discharged through the one or more LED lamps (2-i) becomes zero.

**Patentansprüche**

**1.** Flyback-Leuchtdioden (LED)-Treiber (1) zum Stabilisieren eines Durchschnittsstroms ($I_{avg}$), der durch eine einzelne LED-Lampe (2-i) oder durch mehrere in Reihe geschaltete LED-Lampen (2-i) fließt, wobei der Flyback-LED-Treiber (1) Folgendes umfasst:

einen Transformator (7), der eine Primärspule (5), die mit der einen oder den mehreren LED-Lampen (2-i) parallel geschaltet ist, und eine Sekundärspule (8) umfasst;
einen Spitzenstromkorrektur-Steuerschaltkreis (17), der dafür ausgelegt ist, eine Variation eines Betriebszeitraums (T) des Flyback-LED-Treibers (1) durch Regeln eines Spitzenstroms ($I_{peak}$) der Primärspule (5) in Reaktion auf den sich verändernden Betriebszeitraum (T) dynamisch zu kompensieren;
einen Lade-/Entlade-Transistor (9), der mit der Primärspule (5) verbunden ist und dafür ausgelegt ist, die Primärspule (5) zu laden, wenn der Lade-/Entlade-Transistor (9) eingeschaltet wird, und die Primärspule (5) durch die eine oder die mehreren LED-Lampen (2-i) zu entladen, wenn der Lade-/Entlade-Transistor (9) abgeschaltet wird,
**dadurch gekennzeichnet, dass**
der Lade-/Entlade-Transistor (9) ein NMOS-Transistor ist, der Folgendes aufweist: einen Gate-Anschluss (G), der durch den Spitzenstromkorrektur-Steuerschaltkreis (17) gesteuert wird, einen Drain-Anschluss (D), der mit der Primärspule (5) verbunden ist, und einen Source-Anschluss (S), der über einen Lesewiderstand (11) mit Erde (GND) verbunden ist;
der Spitzenstromkorrektur-Steuerschaltkreis (17) einen ersten Detektionskreis (16) umfasst, der mit der Sekundärspule (8) verbunden ist und dafür ausgelegt ist, eine Zeit ($t_z$) zu detektieren, wann die Primärspule (5) entladen ist, und ein erstes Auslösesignal (TS1) zu generieren;
der Flyback-LED-Treiber (1) des Weiteren einen zweiten Detektionskreis (18) umfasst, der dafür ausgelegt ist, eine Zeit ($t_v$) zu detektieren, wann eine Nachschwing-Amplitude einer Drain-Spannung ($V_D$) an einem Drain-Anschluss (D) des Lade-/Entlade-Transistors (9) einen Mindestwert erreicht, und ein zweites Auslösesignal (TS2) zu generieren,
wobei der Spitzenstromkorrektur-Steuerschaltkreis (17) dafür ausgelegt ist, das erste Auslösesignal (TS1) zu empfangen und eine Kompensation der Variation eines Betriebszeitraums (T) zu starten, um eine regelbare Sollspannung ($V_{set}$) auszugeben,
wobei der Spitzenstromkorrektur-Steuerschaltkreis (17) eine regelbare Sollspannung ($V_{set}$) ausgibt, die durch einen Komparatorschaltkreis (19) mit einer Spannung an dem Lesewiderstand (11) verglichen wird, der mit dem Source-Anschluss (S) des Lade-/Entlade-NMOS-Transistors (9) verbunden ist, und wobei, wenn der Komparatorschaltkreis (19) detektiert, dass die Spannung an dem Lesewiderstand (11) die durch den Spitzenstromkorrektur-Steuerschaltkreis (17) ausgegebene Sollspannung ($V_{set}$) erreicht, er ein Rücksetzungssteuersignal (R) generiert, um den Lade-/Entlade-NMOS-Transistor (9) auszuschalten, dergestalt, dass die Primärspule (5) durch die eine oder die mehreren LED-Lampen (2-i) entladen wird, und
wobei der Flyback-LED-Treiber (1) des Weiteren dafür ausgelegt ist, den Lade-/Entlade-Transistor (9) einzuschalten, um die Primärspule (5) in einer ersten Phase zu laden,
den Lade-/Entlade-Transistor (9) auszuschalten, um die Primärspule (5) in einer zweiten Phase, die auf die erste Phase folgt, zu entladen, sobald detektiert wurde, dass die Spannung an dem Lesewiderstand (11) die regelbare Sollspannung ($V_{set}$) erreicht hat, und den Lade-/Entlade-Transistor (9) einzuschalten, um die Primärspule (5) in einer dritten Phase, die auf die zweite Phase folgt, in Reaktion auf das durch den zweiten Detektionskreis generierte zweite Auslösesignal (TS2) erneut zu laden.

**2.** Flyback-LED-Treiber nach Anspruch 1, wobei eine Versorgungsspannung ($V_{hv}$) an einen ersten Anschluss der Spule (5) angelegt wird und ein zweiter Anschluss der Spule (5) über eine Flyback-Diode (6) mit der einen oder den mehreren LED-Lampen (2-i) verbunden ist und mit dem Drain-Anschluss (D) des Lade-/Entlade-NMOS-Transistors (9) verbunden ist.

**3.** Flyback-LED-Treiber nach Anspruch 1 oder 2, wobei:

- die erste Phase eine erste Ladezeitphase ($\Delta t_1$) ist, während der die Primärspule (5) geladen wird, bis der Lade-/Entlade-Transistor (9) durch den Komparatorschaltkreis (19) abgeschaltet wird,
- die zweite Phase eine zweite Flyback-Zeitphase ($\Delta t_2$) ist, während der die Spule (L1) durch die eine oder die mehreren LED-Lampen (2-i) entladen wird, während der Lade-/Entlade-Transistor (9) abgeschaltet ist, und
- die dritte Phase eine dritte Zeitphase ($\Delta t_3$) ist, bis der Lade-/Entlade-Transistor (9) in Reaktion auf das durch den zweiten Detektionskreis (18) generierte zweite Auslösesignal (TS2) wieder eingeschaltet wird.

**4.** Flyback-LED-Treiber nach Anspruch 3,
wobei der Betriebszeitraum (T) des Flyback-LED-Treibers (1) gegeben ist durch:

$$T = \Delta t_1 + \Delta t_2 + \Delta t_3,$$

wobei $\Delta t_1$ die erste Ladezeitphase ist, die gegeben ist durch:

$$\Delta t_1 = I_{peak} \cdot \frac{L1}{V_{HV}},$$

wobei:

$I_{peak}$ der Spitzenstrom ist, der durch die Spule (5) fließt,
L1 die Induktivität der Spule (5) ist,
$V_{HV}$ die Versorgungsspannung ist, die an den ersten Anschluss der Spule (5) angelegt wird,

wobei $\Delta t_2$ die zweite Flyback-Zeitphase ist, die gegeben ist durch:

$$\Delta t_2 = I_{peak} \cdot \frac{L1}{V_{LED}},$$

wobei:

$I_{peak}$ der Spitzenstrom ist, der durch die Spule (5) fließt,
L1 die Induktivität der Spule (5) ist,
$V_{LED}$ die Durchlassspannung der einen oder der mehreren LED-Lampen (2-i) ist, und

wobei $\Delta t_3$ die dritte Zeitphase ist, die gegeben ist durch:

$$\Delta t_3 = 0{,}5 \cdot T_{osc},$$

wobei:
$T_{osc}$ der Oszillationszeitraum der Nachschwing-Drain-Spannung ($V_D$) an dem Drain-Anschluss (D) des Lade-/Entlade-Transistors (9) ist.

**5.** Flyback-LED-Treiber nach Anspruch 4,
wobei sich der Durchschnittsstrom ($I_{avg}$), der durch die eine oder die mehreren LED-Lampen (2-i) fließt, nach dem Spitzenstrom ($I_{peak}$) der Spule (5) und der zweiten Flyback-Zeitphase ($\Delta t_2$) richtet, wobei der Durchschnittsstrom ($I_{avg}$) gegeben ist durch:

$$I_{avg} \approx 0{,}5 \cdot I_{peak} \cdot \frac{\Delta t_2}{T},$$

wobei der Spitzenstromkorrektur-Steuerschaltkreis (17) dafür ausgestaltet ist, eine Variation des Betriebszeitraums (T) durch Regeln des Spitzenstroms ($I_{peak}$) der Spule (5) dynamisch in Echtzeit zu kompensieren.

**6.** Flyback-LED-Treiber nach Anspruch 5,

wobei der Spitzenstrom-Steuerschaltkreis (17) dafür ausgestaltet ist, den Spitzenstrom ($I_{peak}$) durch Anpassen der Amplitude der Ausgangs-Sollspannung ($V_{set}$) in Abhängigkeit von einem Verhältnis zwischen der zweiten Flyback-Zeitphase ($\Delta t_2$) und dem Betriebszeitraum (T) zu regeln.

7. Flyback-LED-Treiber nach Anspruch 6,
wobei der Spitzenstrom-Steuerschaltkreis (17) dafür ausgestaltet ist, die Sollspannung ($V_{set}$) zu erhöhen, wenn das Verhältnis zwischen der zweiten Flyback-Zeitphase ($\Delta t_2$) und dem Betriebszeitraum (T) kleiner wird.

8. Flyback-LED-Treiber nach einem der vorangehenden Ansprüche 1 bis 7,
wobei der Gate-Anschluss (G) des Lade-/Entlade-NMOS-Transistors (9) mit einem Ausgangs (Q) eines Steuerungs-Flipflops (22) verbunden ist, der in Reaktion auf ein Einstellsteuersignal (S) eingestellt wird und in Reaktion auf das durch den Komparatorschaltkreis (19) generierte Rücksetzungssteuersignal (R) zurückgesetzt wird.

9. Flyback-LED-Treiber nach Anspruch 8,
wobei das Einstellsteuersignal (S) durch einen Logikkreis (25) während eines Betriebszeitfensters zwischen einem zuvor festgelegten Mindestzeitraum ($T_{min}$) und einen zuvor festgelegten Maximalzeitraum ($T_{max}$) in Reaktion auf das durch den zweiten Detektionskreis (18) generierte zweite Auslösesignal (TS2) generiert wird.

10. Flyback-LED-Treiber nach den Ansprüchen 6 oder 7, wobei der Spitzenstromkorrektur-Steuerschaltkreis (17) dafür ausgestaltet ist, eine Lineargefällekompensation auszuführen, wobei die Sollspannung ($V_{set}$) im Lauf der Zeit linear erhöht wird.

11. Flyback-LED-Treiber nach Anspruch 10,
wobei der Spitzenstromkorrektur-Steuerschaltkreis (17) dafür ausgestaltet ist, die Sollspannung ($V_{set}$) in einem linearen Gefälle im Lauf der Zeit in Reaktion auf das durch den ersten Detektionskreis (16) generierte erste Auslösesignal (TS1) zu regeln.

12. LED-Lampe (2), die einen Flyback-LED-Treiber (1) nach einem der Ansprüche 1 bis 11 umfasst.

13. Verfahren zum Stabilisieren eines Durchschnittsstroms ($I_{avg}$) einer einzelnen LED-Lampe (2-i) oder mehrerer in Reihe geschalteter LED-Lampen (2-i) innerhalb eines Flyback-Wandlers (1), wobei
eine Variation eines Betriebszeitraums (T) des Flyback-Wandlers (1) dynamisch in Echtzeit kompensiert wird, indem über einen Spitzenstromkorrektur-Steuerschaltkreis (17) ein Spitzenstrom ($I_{peak}$) einer Primärspule (5) eines Transformators (7) erhöht wird, der die Primärspule (5) und eine Sekundärspule (8) umfasst, wobei die Primärspule (5) mit der einen oder den mehreren LED-Lampen (2-i) in Reaktion auf den sich verändernden Betriebszeitraum (T) parallel geschaltet wird;
die Primärspule (5) durch einen mit der Primärspule (5) verbundenen Lade-/Entlade-Transistor (9) geladen wird, wenn der Lade-/Entlade-Transistor (9) eingeschaltet wird, und die Primärspule (5) durch die eine oder die mehreren LED-Lampen (2-i) entladen wird, wenn der Lade-/Entlade-Transistor (9) abgeschaltet wird,
**dadurch gekennzeichnet, dass**
der Lade-/Entlade-Transistor (9) ein NMOS-Transistor ist, der Folgendes aufweist: einen Gate-Anschluss (G), der durch den Spitzenstromkorrektur-Steuerschaltkreis (17) gesteuert wird, einen Drain-Anschluss (D), der mit der Primärspule (5) verbunden ist, und einen Source-Anschluss (S), der über einen Lesewiderstand (11) mit Erde (GND) verbunden ist;
wobei das Verfahren des Weiteren folgende Schritte umfasst:

Detektieren einer Zeit ($t_z$), wann die Primärspule (5) entladen ist, und Generieren eines ersten Auslösesignals (TS1) ;
Detektieren einer Zeit ($t_v$), wann eine Nachschwing-Amplitude eines Drain-Spannung ($V_D$) an einem Drain-Anschluss (D) des Lade-/Entlade-Transistors (9) einen Mindestwert erreicht, und ein zweites Auslösesignal (TS2) zu generieren; und
Empfangen des ersten Auslösesignals (TS1) und Starten einer Kompensation der Variation eines Betriebszeitraums (T), um eine regelbare Sollspannung ($V_{set}$) auszugeben,
wobei der Lade-/Entlade-Transistor (9) eingeschaltet wird, um die Primärspule (5) in einer ersten Phase zu laden, der Lade-/Entlade-Transistor (9) abgeschaltet wird, um die Spule (5) in einer zweiten Phase zu entladen, die auf die erste Phase folgt, nachdem detektiert wurde, dass die Spannung an dem Lesewiderstand (11) die regelbare Sollspannung ($V_{set}$) erreicht hat, wobei die regelbare Sollspannung ($V_{set}$) mit einer Spannung über einen Lesewiderstand (11) verglichen wird, der mit dem Source-Anschluss (S) des Lade-/Entlade-NMOS-Transistors (9) verbunden ist, und wobei, wenn detektiert wird, dass die Spannung an dem Lesewiderstand (11) die Sollspannung ($V_{set}$) erreicht, ein Rücksetzungssteuersignal (R) generiert wird, um den Lade-/Entlade-NMOS-Transistor (9) auszuschalten, dergestalt, dass die Primärspule (5) durch die eine oder die mehreren LED-Lampen (2-i) entladen wird, und der Lade-/Entlade-Transistor (9) eingeschaltet wird, um die Primärspule (5) in einer dritten Phase, die auf die zweite Phase folgt, in Reaktion auf das durch den zweiten Detektionskreis generierte zweite Auslösesignal (TS2) wieder zu laden.

**14.** Verfahren nach Anspruch 13,
wobei ein elektrischer Strom, der durch die Primärspule (5) fließt, gemessen wird und die Kompensation gestartet wird, wenn der elektrische Strom der Primärspule (5), die durch die eine oder die mehreren LED-Lampen (2-i) entladen wird, null wird.

## Revendications

**1.** Dispositif d'attaque de diodes électroluminescentes (DEL) à transfert indirect (1) destiné à stabiliser un courant moyen ($I_{avg}$) parcourant une lampe à DEL (2 - i) ou une pluralité de lampes à DEL (2 - i) connectées en série, ledit dispositif d'attaque de DEL à transfert indirect (1) comprenant :

un transformateur (7) comprenant un enroulement primaire (5) connecté en parallèle à la lampe ou aux lampes à DEL (2 - i) et un enroulement secondaire (8) ;
un circuit de commande de correction de courant de crête (17) qui est conçu pour compenser dynamiquement une variation de période de temps de fonctionnement (T) dudit dispositif d'attaque de DEL à transfert indirect (1) en ajustant un courant de crête ($I_{peak}$) de l'enroulement primaire (5) en réponse à la période de temps de fonctionnement variable (T) ;
un transistor de charge/décharge (9) connecté audit enroulement primaire (5) et conçu pour charger l'enroulement primaire (5), lorsque le transistor de charge/décharge (9) est mis à l'état passant et pour décharger l'enroulement primaire (5) à travers la lampe ou les lampes à DEL (2 - i), lorsque le transistor de charge/décharge (9) est mis à l'état bloqué,
**caractérisé en ce que** :

le transistor de charge/décharge (9) est un transistor NMOS comportant une borne de grille (G) commandée par ledit circuit de commande de correction de courant de crête (17), une borne de drain (D) connectée audit enroulement primaire (5), et une borne de source (S) connectée à la masse (GND) par le biais d'une résistance de détection (11) ;
le circuit de commande de correction de courant de crête (17) comprend un premier circuit de détection (16) connecté à l'enroulement secondaire (8) et conçu pour détecter un temps ($t_z$) où ledit enroulement primaire (5) est déchargé et pour produire un premier signal de déclenchement (TS1) ;
le dispositif d'attaque de DEL à transfert indirect (1) comprend en outre un second circuit de détection (18) conçu pour détecter un temps ($t_v$) où une amplitude d'oscillation d'une tension de drain ($V_D$) au niveau d'une borne de drain (D) du transistor de charge/décharge (9) atteint une valeur minimum et pour produire un second signal de déclenchement (TS2),
dans lequel ledit circuit de commande de correction de courant de crête (17) est conçu pour recevoir le premier signal de déclenchement (TS1) et pour démarrer une compensation de la variation d'une période de temps de fonctionnement (T) afin de délivrer une tension de réglage ajustable ($V_{set}$),
dans lequel le circuit de commande de correction de courant de crête (17) délivre une tension de réglage ajustable ($V_{set}$) qui est comparée par un circuit comparateur (19) à une tension aux bornes de la résistance de détection (11) connectée à la borne de source (S) dudit transistor NMOS de charge/décharge (9), et
dans lequel si le circuit comparateur (19) détecte que la tension aux bornes de la résistance de détection (11) atteint la tension de réglage ($V_{set}$), délivrée par ledit circuit de commande de correction de courant de crête (17), il produit un signal de commande de remise à l'état initial (R) pour mettre à l'état bloqué le transistor NMOS de charge/décharge (9), de manière que l'enroulement primaire (5) se décharge à travers la ou les lampe(s) à DEL (2 - i), et
dans lequel ledit dispositif d'attaque de DEL à transfert indirect (1) est conçu en outre pour mettre à l'état passant le transistor de charge/décharge (9) afin de charger l'enroulement primaire (5), au cours d'une première phase, mettre à l'état bloqué le transistor de charge/décharge (9) afin de décharger l'enroulement primaire (5), au cours d'une deuxième phase faisant suite à la première phase, lors de la détection de ce que la tension aux bornes de la résistance de détection (11) atteint la tension de réglage ajustable ($V_{set}$),

et mettre à l'état passant le transistor de charge/décharge (9) afin de charger l'enroulement primaire (5) de nouveau, au cours d'une troisième phase faisant suite à la deuxième phase, en réponse au second signal de déclenchement (TS2) produit par le second circuit de détection.

2. Dispositif d'attaque de DEL à transfert indirect selon la revendication 1, dans lequel une tension d'alimentation ($V_{HV}$) est appliquée à une première borne dudit enroulement (5) et une seconde borne dudit enroulement (5) est connectée par le biais d'une diode de transfert indirect (6) à ladite ou auxdites lampe (s) à DEL (2 - i) et est connectée à la borne de drain (D) dudit transistor NMOS de charge/décharge (9).

3. Dispositif d'attaque de DEL à transfert indirect selon la revendication 1 ou 2, dans lequel :

- la première phase est une première phase temporelle de charge ($\Delta t_1$) au cours de laquelle l'enroulement primaire (5) se charge jusqu'à ce que le transistor de charge/décharge (9) soit mis à l'état bloqué par ledit circuit comparateur (19),
- la deuxième phase est une deuxième phase temporelle de transfert indirect ($\Delta t_2$) au cours de laquelle l'enroulement (L1) se décharge à travers la lampe ou les lampes à DEL (2 - i), le transistor de charge/décharge (9) étant à l'état bloqué, et
- la troisième phase est une troisième phase temporelle ($\Delta t_3$) allant jusqu'à ce que le transistor de charge/décharge (9) soit de nouveau mis à l'état passant, en réponse au second signal de déclenchement (TS2) produit par le second circuit de détection (18).

4. Dispositif d'attaque de DEL à transfert indirect selon la revendication 3, dans lequel la période de temps de fonctionnement (T) dudit dispositif d'attaque de DEL à transfert indirect (1) est donnée par :

$$T = \Delta t_1 + \Delta t_2 + \Delta t_3,$$

où

$\Delta t_1$ est la première phase temporelle de charge, donnée par :

$$\Delta t_1 = I_{peak} \cdot \frac{L1}{V_{HV}},$$

$I_{peak}$ étant le courant de crête parcourant l'enroulement (5),
L1 étant l'inductance de l'enroulement (5),
$V_{HV}$ étant la tension d'alimentation appliquée à la première borne de l'enroulement (5),

où $\Delta t_2$ est la deuxième phase temporelle de transfert indirect, donnée par :

$$\Delta t_2 = I_{peak} \cdot \frac{L1}{V_{LED}},$$

$I_{peak}$ étant le courant de crête parcourant l'enroulement (5), L1 étant l'inductance de l'enroulement (5), et $V_{LED}$ étant la tension directe de la lampe ou des lampes à DEL (2 - i), et

où $\Delta t_3$ est la troisième phase temporelle donnée par :

$$\Delta t_3 = 0,5 \cdot T_{OSC},$$

$T_{OSC}$ étant la période de temps d'oscillation de la tension d'oscillation de drain ($V_D$) au niveau de la borne de drain (D) du transistor de charge/décharge (9).

5. Dispositif d'attaque de DEL à transfert indirect selon la revendication 4,

dans lequel le courant moyen ($I_{avg}$) parcourant la lampe ou les lampes à DEL (2 - i) est fonction du courant de crête ($I_{peak}$) de l'enroulement (5) et de la deuxième phase temporelle de transfert indirect ($\Delta t_2$), dans lequel le courant moyen ($I_{avg}$) est donné par :

$$I_{avg} \approx 0.5 \cdot I_{peak} \cdot \frac{\Delta t_2}{T},$$

dans lequel le circuit de commande de correction de courant de crête (17) est conçu pour compenser dynamiquement en temps réel une variation de la période de temps de fonctionnement (T) en ajustant le courant de crête ($I_{peak}$) de l'enroulement (5).

6. Dispositif d'attaque de DEL à transfert indirect selon la revendication 5,
dans lequel le circuit de commande de courant de crête (17) est conçu pour ajuster le courant de crête ($I_{peak}$) en adaptant l'amplitude de la tension de réglage de sortie ($V_{set}$) en fonction d'un rapport entre la deuxième phase temporelle de transfert indirect ($\Delta t_2$) et la période de temps de fonctionnement (T).

7. Dispositif d'attaque de DEL à transfert indirect selon la revendication 6,
dans lequel le circuit de commande de courant de crête (17) est conçu pour augmenter la tension de réglage ($V_{set}$), lorsque le rapport entre la deuxième phase temporelle de transfert indirect ($\Delta t_2$) et la période de temps de fonctionnement (T) diminue.

8. Circuit d'attaque de DEL à transfert indirect selon l'une des revendications 1 à 7 précédentes,
dans lequel la borne de grille (G) du transistor NMOS de charge/décharge (9) est connectée à une sortie (Q) de bascule bistable de commande (22) réglée en réponse à un signal de commande de réglage (S) et remise à l'état initial en réponse au signal de commande de remise à l'état initial (R) produit par ledit circuit comparateur (19).

9. Dispositif d'attaque de DEL à transfert indirect selon la revendication 8,
dans lequel le signal de commande de réglage (S) est produit par un circuit logique (25) au cours d'une fenêtre de temps de fonctionnement entre une période de temps minimum prédéterminée ($T_{min}$) et une période de temps maximum prédéterminée ($T_{max}$) en réponse au second signal de déclenchement (TS2) produit par le second circuit de détection (18).

10. Dispositif d'attaque de DEL à transfert indirect selon la revendication 6 ou 7, dans lequel le circuit de commande de correction de courant de crête (17) est conçu pour réaliser une compensation en pente linéaire, dans lequel la tension de réglage ($V_{set}$) est augmentée de façon linéaire au fil du temps.

11. Dispositif d'attaque de DEL à transfert indirect selon la revendication 10,
dans lequel le circuit de commande de correction de courant de crête (17) est conçu pour ajuster le courant de réglage ($V_{set}$) selon une pente linaire au fil du temps, en réponse au premier signal de déclenchement (TS1) produit par le premier circuit de détection (16).

12. Lampe à DEL (2) comprenant un dispositif d'attaque de DEL à transfert indirect (1) selon l'une quelconque des revendications 1 à 11.

13. Procédé permettant de stabiliser un courant moyen ($I_{avg}$) d'une lampe à DEL (2 - i) ou d'une pluralité de lampes à DEL (2 - i) connectées en série à l'intérieur d'un convertisseur à transfert indirect (1),
dans lequel une variation de période de temps de fonctionnement (T) dudit convertisseur à transfert indirect (1) est compensée dynamiquement en temps réel par augmentation, par le biais d'un circuit de commande de correction de courant de crête (17), d'un courant de crête ($I_{peak}$) d'enroulement primaire (5) d'un transformateur (7) comprenant l'enroulement primaire (5) et un enroulement secondaire (8), l'enroulement primaire (5) étant connecté en parallèle à la lampe ou aux lampes à DEL (2 - i) en réponse à la période de temps de fonctionnement variable (T) ;
charger l'enroulement primaire (5) au moyen d'un transistor de charge/décharge (9) connecté audit enroulement primaire (5), lorsque le transistor de charge/décharge (9) est mis à l'état passant et décharger l'enroulement primaire (5) à travers la lampe ou les lampes à DEL (2 - i), lorsque le transistor de charge/décharge (9) est mis à l'état bloqué, **caractérisé en ce que** :

le transistor de charge/décharge (9) est un transistor NMOS comportant une borne de grille (G) commandée par ledit circuit de commande de correction de courant de crête (17), une borne de drain (D) connectée audit enroulement primaire (5), et une borne de source (S) connectée à la masse (GND) par le biais d'une résistance de détection (11) ;

le procédé comprend en outre les étapes consistant à :

détecter un temps ($t_z$) où ledit enroulement primaire (5) est déchargé et produire un premier signal de déclenchement (TS1) ;

détecter un temps ($t_v$) où une amplitude d'oscillation d'une tension de drain ($V_D$) au niveau d'une borne de drain (D) du transistor de charge/décharge (9) atteint une valeur minimum et produire un second signal de déclenchement (TS2) ; et

recevoir le premier signal de déclenchement (TS1) et démarrer une compensation de la variation d'une période de temps de fonctionnement (T) afin de délivrer une tension de réglage ajustable ($V_{set}$),

dans lequel le transistor de charge/décharge (9) est mis à l'état passant pour charger l'enroulement primaire (5) au cours d'une première phase, le transistor de charge/décharge (9) est mis à l'état bloqué pour décharger l'enroulement (5) au cours d'une deuxième phase faisant suite à la première phase, lors de la détection de ce que la tension aux bornes de la résistance de détection (11) atteint la tension de réglage ajustable ($V_{set}$), dans lequel la tension de réglage ajustable ($V_{set}$) est comparée à une tension aux bornes d'une résistance de détection (11) connectée à la borne de source (S) dudit transistor NMOS de charge/décharge (9), et dans lequel s'il est détecté que la tension aux bornes de la résistance de détection (11) atteint la tension de réglage ($V_{set}$), un signal de commande de remise à l'état initial (R) est produit pour mettre à l'état bloqué le transistor NMOS de charge/décharge (9), de manière que l'enroulement primaire (5) se décharge à travers la lampe ou les lampes à DEL (2 - i), et le transistor de charge/décharge (9) est mis à l'état passant pour charger l'enroulement primaire (5) de nouveau au cours d'une troisième phase faisant suite à la deuxième phase, en réponse au second signal de déclenchement (TS2) produit par le second circuit de détection.

14. Procédé selon la revendication 13,
dans lequel un courant électrique parcourant ledit enroulement primaire (5) est mesuré et la compensation est démarrée lorsque le courant électrique de l'enroulement primaire (5) déchargé à travers la lampe ou les lampes à DEL (2 - i) devient nul.

FIG 1

## FIG 2

## FIG 3

## FIG 4

Imax2/Imax

—◇— Imax2/Imax
- - - - Linear (Imax2/Imax)
$Y = 0.6628x + 0.3588$

## FIG 5

# FIG 6

## FIG 7

## FIG 8

I —— Ideal    II ---- lin. comp.    III —··— no. comp.

## FIG 9

I —— Ideal    II ---- lin. comp.    III —··— no. comp.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090058323 A1